# EUROPEAN PATENT SPECIFICATION

(11) **EP 3 235 269 B1**
(45) Date of publication and mention of the grant of the patent: **26.09.2018**
(21) Application number: 15801967.9
(22) Date of filing: 17.11.2015
(51) Int. Cl.: H04W 4/00, H04W 4/80, H04W 4/70, H04W 8/00, H04W 76/14, H04W 84/18, H04W 84/12

(54) **METHOD AND SYSTEM FOR AUTOMATING AND ASSISTING WI-FI DIRECT CONNECTIONS USING MOBILE-DEVICE IR-BLASTER**
VERFAHREN UND SYSTEM ZUR AUTOMATISIERUNG UND UNTERSTÜTZUNG VON WLAN-DIREKTVERBINDUNGEN UNTER VERWENDUNG EINES IR-BLASTERS EINER MOBILVORRICHTUNG
PROCÉDÉ ET SYSTÈME D'AUTOMATISATION ET D'ASSISTANCE DE CONNEXIONS WIFI DIRECT UTILISANT UN ÉMETTEUR IR DE DISPOSITIF MOBILE

(30) Priority: 16.12.2014 US 201414572165
(43) Date of publication of application: 25.10.2017
(73) Proprietor: Qualcomm Incorporated, San Diego, CA 92121-1714 (US)
(72) Inventor: RABII, Khosro Mohammad, San Diego, California 92121-1714 (US); SUBRAMANIAM, Vijay Naicker, San Diego, California 92121-1714 (US); SHAUKAT, Fawad, San Diego, California 92121-1714 (US); BALASUBRAMANYAM, Shivakumar, San Diego, California 92121-1714 (US)
(74) Representative: Howe, Steven
(86) International application number: PCT/US2015/061117
(87) International publication number: WO 2016/099751

(56) References cited:
- EP-A1- 1 742 421
- GB-A- 2 427 101

## Description

### BACKGROUND

### Field

The present application relates generally to wireless communications and, more specifically, to systems, methods, and devices for automating and assisting establishing wireless communication connections between a plurality of devices.

### Description of the Related Art

In some environments, users may desire to display content (e.g., media or data) accessible on a device having a small screen with a larger audience via a larger display (or monitor). Accordingly, the user may connect the device with the larger display; the connection between the device and the larger display via which the content is to be shared may be wired (e.g., HDMI or USB) or wireless (e.g., Wi-Fi or Bluetooth). Wired connections may require the device and the larger display to be within reach of the user and may result in restricted movement and location of the device. Available connections or ports of the device and the larger display and available wires may also restrict wired connections. Wireless connections may utilize peer-to-peer (P2P) ad-hoc associations or networks to establish communication paths directly between the connected devices or may utilize existing wireless networks to communicate between the connected wireless devices via an access point (AP). Both the device and the larger display should be capable of connected to a wireless network.

A Wireless-Display (WiDi) framework is one framework that allows devices to share its user interface (UI) and media and controls with another display device, for example, a television, a computer monitor, a projector, etc., via an existing wireless network. This sharing may entail extending a display of the device to the larger display or duplicating the display of the device on the larger display. For example, a user of a mobile device (e.g., a cell phone) may wish to wirelessly display a video from the cell phone on a large television to more easily show the video to a crowd of people without physically connecting his/her phone to the large television. Similar content sharing frameworks may exist for wired connections as well. Establishing the wireless P2P connection between the phone and the large television may be a complicated or time consuming process. For example, the user may have to manually (for example, perform multiple individual actions) pair his phone and the larger television using any of a variety of techniques, for example, PIN (Personal Identification Number) or PBC (Push-Button Configuration) pairing methods. These methods or other Wi-Fi Direct/P2P and Wireless-Protected-Setup (WPS) technologies that are used to wirelessly connect electronic devices to each other may discover any and all wireless devices within range of and connected to a given Wi-Fi network. Under these methods and technologies, the phone looking to pair with the larger television may search the wireless network for all available televisions or other display devices connected to the wireless network. The results of this search may produce a list of all devices and display the list on the phone. The list may include devices that may not be visible or accessible to the user (e.g., devices located in other rooms) or devices that may not be appropriate display device (e.g., other phones or media players with small screens). The list of devices may utilize any of a variety of names or other identifying information, e.g., MAC address, network identifier, etc., to individually identify the devices in the list. In many instances, the names may not be easily understood by the user, or the user may be unable to determine which device on the list is the display device the user wishes to use. Even if the names are understandable by the user, the user should then know the name of the television on which the user desires to display the video.

Alternatively, using a PBC or WPS method, the user may need to access the television on which the user desires to display the information or media to press a button or enter information, which may be difficult depending on where or how the television is mounted. Thus, pairing of the phone with the larger display may be complicated by using one of these methods or technologies because the user may be unable to easily and quickly pair the phone with the television. Thus, improved systems, methods, and devices for automated and simplified establishment of communications between a mobile device and a larger display are desired.

GB2427101 discloses a communication terminal that includes an RF transceiver for communication by an RF link with another terminal, and an infrared terminal to send an infrared signal to the other terminal to establish an initial communication link with the other terminal. EP 1742421 describes a wireless communication system that uses infrared communication to request connection between two terminals.

### SUMMARY

The invention is defined by the subject matter of the appended claims. Without limiting the scope of this invention as expressed by the claims which follow, some features will now be discussed briefly. After considering this discussion, and particularly after reading the section entitled "Detailed Description," one will understand how the features of the various implementations of this invention provide advantages that include improved communications between mobile devices and display devices.

In an aspect of the disclosure, an apparatus for establishing peer-to-peer communications is provided. The apparatus comprises a processing system, an infrared transmitter, and an antenna. The processing system is configured to receive a command to initiate a peer-to-peer communication. The processing system is further configured to generate an infrared signal for transmission to a second device and find the second device on a wireless communication network. The processing system is also configured to generate a request to form a peer-to-peer connection with the second device for transmission to the second device via the wireless communication network. The processing system is also configured to connect to the second device via the peer-to-peer connection on the wireless communication network based on the commands in the infrared signal. The infrared communication comprises a command to set a wireless network connection of the device to a first preferred channel based on one of the infrared signal and a default setting of the device. The infrared transmitter may be configured to transmit the infrared signal to the second device, while the antenna is configured to participate in wireless communications on the wireless communication network.

Another aspect of the disclosure relates to a method for establishing peer-to-peer communications. The method comprises receiving, by a first device, a command to initiate peer-to-peer communications. The method further comprises generating an infrared communication for transmission to a second device and transmitting the infrared communication to the second device. The infrared communication includes a command to activate the second device. The method further comprises transmitting the infrared communication to the second device and connecting to the second device via a peer-to-peer connection on the wireless communication network. The infrared communication comprises a command to set a wireless network connection of the second device to a first preferred channel based on one of the infrared communication and a default setting of the second device. The peer-to-peer connection with the second device over the wireless communication network is established based on the commands in the infrared communication.

Another aspect of the disclosure relates to an apparatus for establishing peer-to-peer communications. The apparatus comprises an infrared receiver configured to receive an infrared signal from a second apparatus and an antenna configured to communicate on a wireless communication network. The apparatus further comprises a processing system configured to receive an infrared signal comprising a command to activate. The processing system is further configured to power on the apparatus if the apparatus is in a standby or low-power mode. The processing system is further configured to set the network connection based on one of the infrared signal and default settings based on the infrared signal, and to set the network parameters to the first preferred channel for the wireless communication network based on the communication signal.

An additional aspect of the disclosure relates to a method for establishing peer-to-peer communications. The method comprises receiving an infrared signal from a second apparatus, the infrared signal comprising a power on signal and a communication signal. The method further comprises powering on the apparatus if the apparatus is in a stand-by or low power mode and setting network parameters for the wireless communication network based on the received communication signal. The infrared signal comprises a command to set a wireless network connection to a first preferred channel based on one of the infrared signal and a default setting.

### BRIEF DESCRIPTION OF THE DRAWINGS

The above-mentioned aspects, as well as other features, aspects, and advantages of the present technology will now be described in connection with various implementations, with reference to the accompanying drawings. The illustrated implementations, however, are merely examples and are not intended to be limiting. Throughout the drawings, similar symbols typically identify similar components, unless context dictates otherwise. Note that the relative dimensions of the following figures may not be drawn to scale.
Figure 1 illustrates an implementation of a system having one or more of a plurality of mobile devices attempting to establish a wireless P2P connection with at least one of a plurality of display devices via a pairing process on a wireless network, in accordance with an exemplary implementation.
Figure 2 illustrates an implementation of a system having one mobile device attempting to establish a wireless P2P connection with at least one of a plurality of
   display devices via a combination of infrared communications and communications on a wireless network, in accordance with an exemplary implementation.
Figure 3 illustrates an implementation of a wireless device of one or more of the devices of Figures 1 and 2, in accordance with an exemplary implementation.
Figure 4 illustrates communications exchanged between the one mobile device and the at least one display device when establishing the wireless P2P connection, in accordance with an exemplary implementation.
Figure 5 illustrates a message frame that may be used for communicating information from the one mobile device to the at least one display device via an infrared communication, in accordance with an exemplary implementation.
Figure 6 illustrates a flow chart of a method of establishing the wireless P2P connection between the one mobile device and the at least one display device, in accordance with an exemplary implementation.
Figure 7 is a functional block diagram of the at least one display device operating to establish the wireless P2P connection with the one mobile device, in accordance with an exemplary implementation.
Figure 8 illustrates a flow chart of an implementation of a process, implemented by the one mobile device, to establish the wireless P2P connection with the at least one display, in accordance with an exemplary implementation.
Figure 9 illustrates a flow chart of an implementation of a process, implemented by the at least one display, to establish the wireless P2P connection with the one mobile device, in accordance with an exemplary implementation.

### DETAILED DESCRIPTION

Various aspects of the novel systems, apparatuses, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure may be thorough and complete, and may fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of, or combined with, any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure defined by the appended claims and equivalents thereof.

Popular wireless network technologies may include various types of wireless local area networks (WLANs). A WLAN may be used to interconnect nearby devices together, employing widely used networking protocols. The various aspects described herein may apply to any communication standard, such as Wi-Fi or, more generally, any member of the IEEE 802.11 family of wireless protocols. For example, the various aspects described herein may be used as part of the IEEE 802.11ah protocol, which uses sub-lGHz bands.

In some aspects, wireless signals in a sub-gigahertz band may be transmitted according to the 802.11ah protocol using orthogonal frequency-division multiplexing (OFDM), direct-sequence spread spectrum (DSSS) communications, a combination of OFDM and DSSS communications, or other schemes. Implementations of the 802.11ah protocol may be used for sensors, metering, and smart grid networks. Advantageously, aspects of certain devices implementing the 802.11ah protocol may consume less power than devices implementing other wireless protocols, and/or may be used to transmit wireless signals across a relatively long range, for example about one kilometer or longer.

In some implementations, a WLAN includes various devices which are the components that access the wireless network. For example, there may be two types of devices: access points ("APs") and clients (also referred to as stations, or "STAs"). In general, an AP serves as a hub or base station for the WLAN and an STA serves as a user of the WLAN. For example, an STA may be a laptop computer, a television, a projector, a personal digital assistant (PDA), a mobile phone, etc. In an example, an STA connects to an AP via a Wi-Fi (e.g., IEEE 802.11 protocol such as 802.11ah) compliant wireless link to obtain general connectivity to the Internet or to other wide area networks. In some implementations an STA may also be used as an AP. A STA or an AP may be referred to as a node or a wireless node in a wireless communications network. A STA or an AP may also be referred to as a wireless device or an access terminal in a wireless communications network.

In some aspects, the node is a wireless node. Such wireless nodes may provide, for example, connectivity for or to a network (e.g., a wide area network such as the Internet or a cellular network) via a wired or wireless communication link. The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

As discussed above, certain of the devices described herein may implement the 802.11ah standard, for example. Such devices, whether used as an STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications.

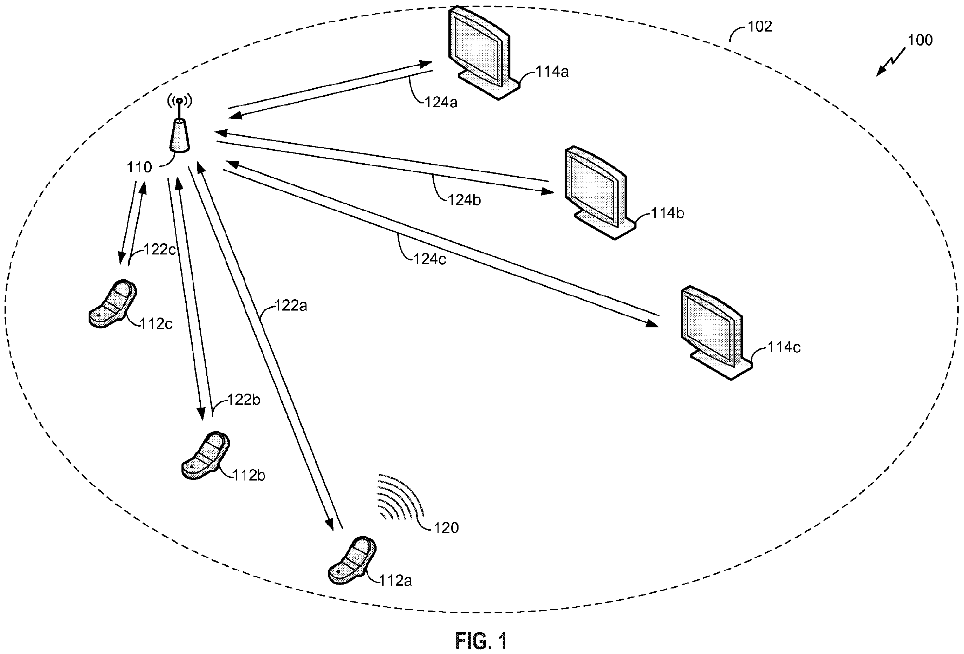

Figure 1 illustrates an implementation of a system 100 having a plurality of mobile devices 112a-112c, at least one of which may attempt to establish a wireless peer-to-peer (P2P) connection with one or more of a plurality of display devices 114a-114c on a wireless network 102. As shown by Figure 1, each of the mobile devices 112a-112c and each of the display devices 114a-114c may communicate with a wireless access point 110. These wireless communications may be in the form of any 802.11 wireless format or any other wireless standard, as noted above.

The mobile devices 112a-112c may communicate with the wireless access point (AP) 110 via messages 122a-122c, respectively. Messages 122a-122c may correspond to both directions of messages between the AP 110 and the mobile devices 112a-112c (for example, the messages from the AP 110 to the mobile devices 112a-112c and the messages from the mobile devices 112a-112c to the AP 110). Similarly, the display devices 114a-114c may communicate with the AP 110 via message 124a-124c, respectively. As described above with regards to messages 122a-122c, messages 124a-124c may each represent bidirectional messages between the respective display devices 114a-114c and the access point 110. For example, messages 124a may represent the messages to the AP 110 from the display device 114a and the messages from the AP 110 to the display device 114a. Messages 124b may represent the messages to the AP 110 from the display device 114b and the messages from the AP 110 to the display device 114b. Messages 124c may represent the messages to the AP 110 from the display device 114c and the messages from the AP 110 to the display device 114c. In some implementations, as depicted in Figure 1, the mobile device 112a may be capable of communicating with one or more of the display devices 114a-114c via wireless communication 120. The wireless communication 120 may comprise one or more of Bluetooth, ad-hoc Wi-Fi, etc.

The wireless network 102 may represent the range of the AP 110, for example, an area within which the AP 110 may communicate with any devices connected to the wireless network 102. The AP 110 may establish and maintain the wireless network 102 to support wireless communication between devices associated with the wireless network 102. Accordingly, the AP 110 may enable the devices connected to the wireless network 102 to communicate with each other via the AP 110. Traffic between the devices associated with the wireless network 102 may be routed via the AP 110 or may be directly communicated between the various devices. For example, display device 114a may communicate with display device 114c via messages 124a and 124c routed through AP 110. Accordingly, any device within the wireless network 102 may be capable of communicating with any other device within the wireless network 102. In some implementations, one or more of the display devices 114a-114c may be in a separate room or location from the other display devices 114a-114c or from one or more of the mobile devices 112a-112c, and may not be visible to one or more of the mobile devices 112a-112c. However, if connected to the wireless network 102, these devices may be able to communicate with each other via the wireless network 102 while not physically located in the same room.

The mobile devices 112a-112c may represent a cellular phone or a media device or any other mobile or stationary device from which a user may desire to display content (e.g., media, data, or other information). The display devices 114a-114c may represent televisions, monitors, projectors, or other devices on which the content may be displayed to one person or a group of people more easily. For example, the user may wish to display pictures from a cell phone 112a to a group of people via a television 114a or may wish to broadcast a video from a media player on a projector 114b. As shown in Figure 1, the wireless network 102 may allow for the sharing of media or other data from one or more of the mobile devices 112a-112c to one or more of the display devices 114a-114c wirelessly.

In some implementations, the user of the mobile device 112a may desire to display the content discussed above on one or more of the display devices 114a-114c without physically connecting the mobile device 112a to the respective display device(s) 112. As described above, to wirelessly connect to one of the display devices 114a-114c, the user, via the mobile device 112a, may scan for all devices connected to the wireless network 102. The scan may result in a list of all of the devices 112b, 112c, and 114a-114c, each of the devices 112b, 112c, and 114a-114c having a unique identifier in the list. However, as discussed above, not all of the display devices 114a-114c may be physically visible to the mobile device 112a, and not all of the devices returned in the list may be display devices 114a-114c, as other mobile devices 112b and 112c may also be returned. Accordingly, the user of the mobile device 112a should know which display devices 114a are accessible to him and should know what unique identifier corresponds to the display device 114a (or the display device 114 on which the user wishes to display the content).

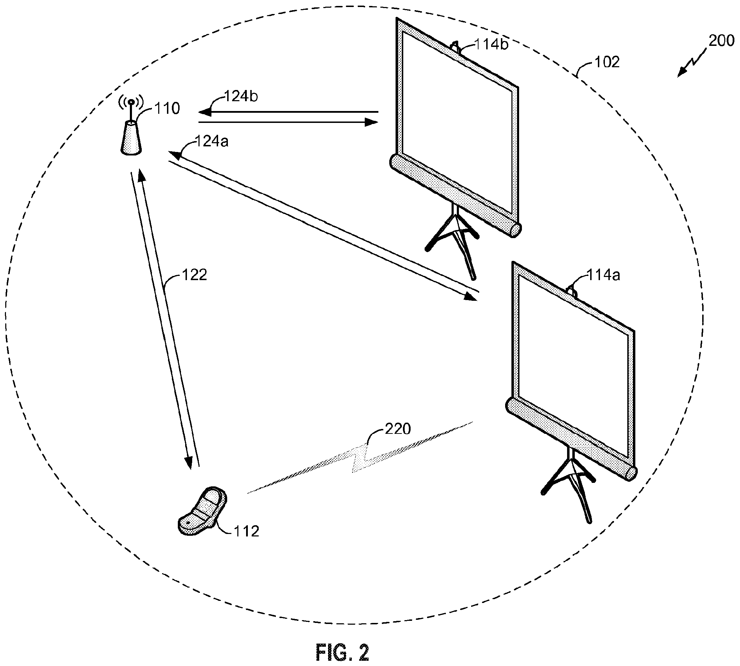

Figure 2 illustrates an implementation of a system 200 having one mobile device 112a attempting to establish a wireless P2P connection with one of a plurality of display devices 114a and 114b via a combination of infrared communications 220 and messages 124a and 124b on a wireless network via AP 110. Many of the devices of Figure 2 are duplicates of the devices shown in Figure 1 and will not be described again. As shown in Figure 2, all of the mobile device 112a, the AP 110, and the display devices 114a and 114b are connected to the wireless network 102. As described in reference to Figure 1, the display devices 114a and 114b may not be in the same room or within line-of-sight of each other or of the mobile device 112a. Accordingly, as described above, the user of the mobile device 112a may have difficulty determining which display device 114a or 114b is in his line-of-sight if the user does not know the name of the display device 114 as associated with the wireless network list described above.

Thus, Figure 2 depicts a system establishing the P2P communications between the mobile device 112a and the display device 114a without requiring the user's involvement beyond the activation of a connection process. The system shown in Figure 2 includes an infrared communication 220 between the mobile device 112a and the display device 114a. In some implementations, a method of creating the P2P connection between the mobile device 112a and the display device 114a may incorporate the infrared communication 220. Infrared communications, being a line-of-sight communication method, may be used to isolate communications to devices within an immediate, visual vicinity. Additionally, depending on an emitter used to emit the infrared communications, the infrared communications may be directional, meaning the source of the infrared communications may need to be "pointed" or positioned in a specific manner to transmit the infrared communications in a specific direction.

Thus, the system depicted in Figure 2 may be used to create the P2P communication between the mobile device 112a and the display device 114a by generating and transmitting the infrared communication 220 from the mobile device 112a to the display device 114a. As described above, the mobile device 112a may need to be pointed at the display device 114a to properly communicate the infrared communication 220; accordingly, the user may be ensured that the P2P communications will be established with the desired display device 114a. In some implementations, the infrared communication 220 may simplify the establishing of the P2P communication by providing initial identifying information to the display device 114a regarding the mobile device 112a or may provide commands instructing the display device 114a to perform specific actions. As the user is not required to select the display device 114a from a list of various network device or gain physical access to the display device 114a to activate a connection button, the system depicted in Figure 2 provides a simplified connection that may be automated.

After the infrared communication 220 is communicated to the display device 114a from the mobile device 112a, P2P communications may be established routed through the AP 110 via the messages 122a and 124a. In some implementations, the P2P communications may be established directly between the mobile device 112a and the display device 114a (not shown in this figure) via an ad-hoc P2P wireless connection or any other wireless P2P networking connection (e.g., Bluetooth). In some implementations, identifying information may be shared via infrared communication 220 as discussed above. The identifying information may be used to allow the display device 114a and the mobile device 112a to more easily identify each other on the wireless network 102. For example, the identifying information may comprise the IP, MAC, or other address of the mobile device 112a so the display device 114a knows what device on the network was the source of the infrared communication 220. In some implementations, the infrared communication 220 may comprise additional commands that instruct the display device 114a to perform specific actions, for example, switch a wireless networking connection to a given channel and wait for further communications on that channel. In some other implementations, the infrared communication 220 may comprise both additional commands and identifying information, or may comprise other information or data that may be used to facilitate creating the P2P connection.

In some embodiments, the display devices 114a-114c may comprise an infrared receiver. For example, the infrared receiver may allow the display device 114a to receive infrared commands from other devices (for example, remote controls, PDAs, computers, etc.). In some embodiments, the infrared receiver may comprise an infrared transceiver, allowing the display device 114a to participate in bi-directional infrared communications. The display device 114a may further comprise an antenna or other communication structure configured to communicate on a wireless communication network (for example, a Wi-Fi network). The display device 114a may further comprise a processing system that is configured to determine the received the infrared signal from the infrared receiver was received from a mobile device 112a and not another device (for example, a remote control). The processing system identifies a power on command and a network parameters signal. The power on command may be used to turn on the display device 114a if it is in a low power or standby mode. The network parameters signal may be used by the display device 114a to set its network settings to a standard or default channel and address such that the mobile device 112a from which the infrared signal was received will know where to find the display device 114a on the wireless communication network. The processing system may then receive a request to form a peer-to-peer connection from the mobile device 112a via the wireless communication antenna. Accordingly, the processing system may generate a response accepting or rejecting the P2P connection request and may transmit the response to the mobile device 112a. In some embodiments, the display device 114a may accept the request but propose alternate connection parameters (for example, a P2P connection speed, duration, etc.) than those received from the mobile device 112a. In some embodiments, the processing system may comprise a timer that begins a countdown once the processing system sets its network parameters based on the infrared signal. If the display device 114a does not receive a P2P connection request before the timer completes its countdown, the display device 114a may enter standby or low power mode.

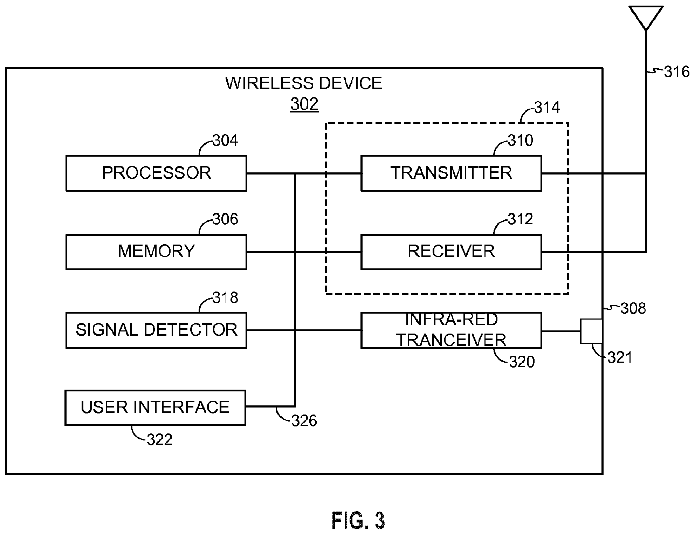

Referring to FIG. 3, an exemplary functional block diagram of a wireless device 302 that may be employed within the communication systems of Figures 1 and 2. The wireless device 302 is an example of a device configured to implement the various methods described herein. For example, the wireless device 302 may comprise one of the devices 112a-112c or 114a-114c. Those skilled in the art will appreciate that a wireless device can have more components than the simplified wireless device described herein. The wireless device described herein includes only those components useful for describing some prominent features of implementations within the scope of the claims.

The wireless device 302 may include a processor 304 which controls operation of the wireless device 302. The processor 304 may also be referred to as a central processing unit (CPU). Memory 306, which may include both read-only memory (ROM) and random access memory (RAM), may provide instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The processor 304 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 302 may also include a housing 308 that may include a transmitter 310 and/or a receiver 312 to allow transmission and reception of data between the wireless device 302 and a remote location. The transmitter 310 and receiver 312 may be combined into a transceiver 314. An antenna 316 may be attached to the housing 308 and electrically coupled to the transceiver 314. The wireless device 302 may also include (not shown) multiple transmitters, multiple receivers, multiple transceivers, and/or multiple antennas.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include an infrared transceiver 320 for use in processing infrared signals. In some implementations, the infrared transceiver 320 may be separated into two separate components, an infrared transmitter and an infrared receiver (not shown in this figure). The infrared transceiver 320 may be configured to transmit and/or receive a packet of information to/from another infrared device. In some aspects, the infrared transceiver 320 may be coupled to an infrared emitter/receiver 321 that may have a visually exposed portion in the housing 308. As infrared signals are light waves, the infrared emitter/receiver 321 should be optically accessible to devices external to the housing 308. The emitter/receiver 321 provides the optical connection to/from the infrared transceiver 320 to external infrared devices. The infrared emitter/receiver 321 may generate an infrared signal corresponding to data received from the transceiver 320 for transmission. The infrared emitter/receiver 321 may generate data to communicate to the transceiver 320 corresponding to an infrared signal received from and external infrared device. In some implementations, infrared communications transmitted by the infrared transceiver 320 or the infrared transmitter may only be received by another infrared device that is within the line-of-sight. This means that nothing may block a visual path between the infrared transceiver 320 and the infrared device. Additionally, the infrared signal generated by the infrared emitter/receiver 321 may be directional (for example, the infrared emitter/receiver 321 should be pointed in the general direction of the infrared device such that the signal emitted by the infrared emitter/receiver 321 is received by the other infrared device). The receiving of infrared signals from the infrared device may be restricted by similar limitations (e.g., line-of-sight and directionality).

The wireless device 302 may further comprise a user interface 322 in some aspects. The user interface 322 may comprise a keypad, a microphone, a speaker, and/or a display. The user interface 322 may include any element or component that conveys information to a user of the wireless device 302 and/or receives input from the user.

The various components of the wireless device 302 may be coupled together by a bus system 326. The bus system 326 may include a data bus, for example, as well as a power bus, a control signal bus, and a status signal bus in addition to the data bus. Those of skill in the art may appreciate the components of the wireless device 302 may be coupled together or accept or provide inputs to each other using some other mechanism.

Although a number of separate components are illustrated in FIG. 3, those of skill in the art may recognize that one or more of the components may be combined or commonly implemented. For example, the processor 304 may be used to implement not only the functionality described above with respect to the processor 304, but also to implement the functionality described above with respect to the signal detector 318. Further, each of the components illustrated in FIG. 3 may be implemented using a plurality of separate elements.

The wireless device 302 may comprise a device 110, 112a-112c and 114a-114c, and may be used to transmit and/or receive communications. That is, devices 110, 112a-112c and 114a-114c may serve as transmitter or receiver devices. Certain aspects contemplate signal detector 318 being used by software running on memory 306 and processor 304 to detect the presence of a transmitter or receiver.

As described above, a wireless device, such as wireless device 302, may be configured to provide services or communication within a wireless communication system, such as the device mesh network 110a. For example, the wireless device 302, such as devices 112a-112c, may include hardware (e.g., a camera, a browser, etc.) that may be used to capture or calculate data (e.g., sensor measurements, location coordinates, etc.). An application running on a device 112a-112c and 114a-114c may then use the captured or calculated data to perform an operation. The devices 112a-112c and 114a-114c may be capable of communicating with each other and may include hardware allowing for the sharing of content and control between the devices 112a-112c and 114a-114c. For example, device 112a could communicate controls and content to the device 114a, thereby controlling the device 114a and what content may be displayed by device 114a.

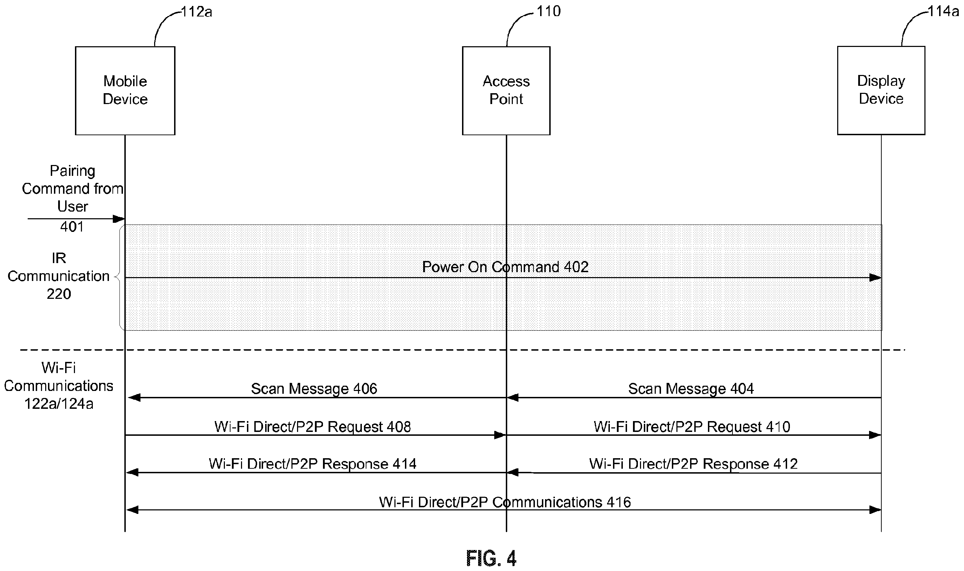

Figure 4 illustrates communications exchanged between the mobile device 112a, the AP 110, and the display device 114a when establishing the wireless P2P connection, in accordance with an exemplary implementation. The figure depicts three devices: the AP 110 as referenced in Figures 1 and 2, the mobile device 112a, as referenced in Figures 1 and 2, and the display device 114a, as referenced in Figures 1 and 2. Below the mobile device 112a, the AP 110, and the display device 114a are shown multiple messages being communicated between the mobile device 112a, the AP 110, and the display device 114a. One of art would understand that not all of the messages shown may be utilized or that additional message not shown may be utilized by the invention described herein.

As discussed in reference to Figure 2, two types of communication may exist between the AP 110, the mobile device 112a, and display device 114a. In some implementations, as shown in Figure 4, those two modes of communication may comprise Wi-Fi and infrared. For example, the infrared communication 220 discussed in Figure 2 is shown being communicated from the mobile device 112a directly to the display device 114a. Additionally, multiple Wi-Fi communication messages are shown between the mobile device 112a, the access point 110, and the display device 114a. Furthermore, Figure 4 shows a pairing command 401 being received from the user of the mobile device 112a. Receiving the pairing command 401 may initiate the P2P pairing process briefly described in Figure 2. As described above, due to the infrared communication type, the user may point the mobile device 112a in the general direction of the display device 114a and press a button/switch to activate the command. After the "pairing" command 401 is activated, the mobile phone device 112 may generate and transmit a power on command 402 to the display device 114a. The power on command 402 may be an infrared communication 220, as referenced by Figure 2. As the infrared communication 220 comprising the power on command 402 is directional and line-of-sight (as described above in relation to Figure 3), for the display device 114a to receive the power on command 402 within the infrared communication 220, the mobile device 112a should be pointed in the direction of the display device 114a and there should be nothing blocking a path of the infrared communication 220 between the mobile device 112a and the display device 114a.

When the display device 114a receives the power on command 402 from the mobile device 112a, the display device 114a may "power on" if it is not already powered on. In some implementations, the power on command 402 may be interpreted as requesting the display device 114a activate its Wi-Fi communication capabilities. Additionally, in some implementations, as described above, the power on command 402 may comprise additional commands or information. For example, the power on command 402 may comprise identification information for the mobile device 112 as the source of the power on command 402. Alternatively, or additionally, the power on command 402 may comprise additional commands instructing the display device 114a to switch to a specific channel and scan for the mobile device 112a. In some implementations, the specific channel to which the display device 114a switches may be established by the manufacturer of the display device 114a and may be stored in the memory of the display device 114a. In some other implementations, the specific channel may be indicated in the power on command 402. Alternatively, the specific channel may be industry or standards set. In some implementations, the power on command 402 may comprise additional commands instructing the display device 114a to scan for a third device (not shown in this figure) and/or providing identification information for the third device.

After receiving the power on command 402 and performing the associated commands and/or receiving the associated information, the display device 114a may scan for the mobile device 112a as the source of the power on command 402. The scan may comprise the display device 114a sending a scan message 404 to the AP 110 and the AP 110 forwarding that scan message 406 to all connected devices, including the mobile device 112a. Alternatively, in some implementations in which the power on command 402 instructed the display device 114a to switch to communications on a specific channel, the mobile device 112a may scan for the display device 114a on the specific channel via communications with the AP 110 (not shown on this figure).

Alternatively, or additionally, the mobile device 112a may generate and transmit a Wi-Fi direct/P2P (P2P) request message 408 to the AP 110 via messages 122a. The P2P request message 408 may comprise a request and associated information to request a P2P connection with the display device 114a. For example, the P2P request 408 may include one or more of a suggested channel for the P2P connection, a suggested speed for the P2P connection, and a suggested duration for the P2P connection, among other parameters and setting. In some implementations, the mobile device 112a may not yet know the specific Wi-Fi address of the display device 114a, and the AP 110 may be directed to broadcast a P2P request 410 (essentially duplicate of the P2P request 408) to all connected network devices, one of which may comprise the display device 114a.

When the display device 114a receives the P2P request 408/410 broadcast by the AP 110 and the mobile device 112a, the display device 114a may generate and transmit a Wi-Fi Direct/P2P (P2P) response 412. The display device 114a may transmit the P2P response 412 to the mobile device 112a via the AP 110 or may transmit the P2P response 412 to the mobile device 112a directly via the channel indicated in the P2P request 410. The P2P response 412 may indicate that the display device 114a agrees to participate in the P2P communication or disagrees to participate in the P2P communication. For example, in some implementations, the display device 114a may already be participating in a P2P communication with another mobile device 112, and, thus, may disagree to participate in the P2P communication with the display device 112a as requested. Alternatively, the display device 114a may disagree to participate in the P2P communication because it cannot agree to the speed or duration or other parameter or setting requirements requested by the mobile device 112a. In some implementations, the display device 114a may suggest new a new speed or a new duration or other parameter or setting in the P2P response 412/414 while disagreeing to the communication, thus informing the mobile device 112a why the display device 114a is disagreeing. In some implementations, the display device 114a may agree to the P2P communication while suggesting the new speed or the new duration or other parameter in the P2P response 412/414. Then, if the mobile device 112a and the display device 114a agree to a set of parameters (e.g., speed, duration, full/half duplex, channel, media type, etc.), the two devices 112a and 114a may participate in Wi-Fi Direct/P2P (P2P) communications 416 and communicate information bi-directionally. As the purpose of the P2P communication 416 may be to display content from the mobile device 112a on the display device 114a, the P2P communications 416 may not be bidirectional, but instead only support data flow from the mobile device 112a to the display device 114a.

Alternatively, though not shown in this figure, the mobile device 112a may generate and attempt to transmit the P2P request directly to the display device 114a. In such implementations, the mobile device 112a may transmit the generated P2P request on a specific channel as instructed in the power on command 402 or on a specific channel according to a list of manufacturer's specific channels or the like. If the mobile device 112a does not receive the P2P response message from the display device 114a agreeing or disagreeing with the P2P request within a specific time, then the mobile device 112a may transmit the P2P request on a different channel associated with a different model/manufacturer of display device 114a. This process may be repeated until the mobile device 112a receives a P2P response from the display device 114a either agreeing or disagreeing to participate in the P2P communication. In some embodiments, the P2P response may comprise one or more of suggestions for a duration of the P2P connection, a different suggested speed for the P2P connection, a different suggested channel, and a different suggested media type.

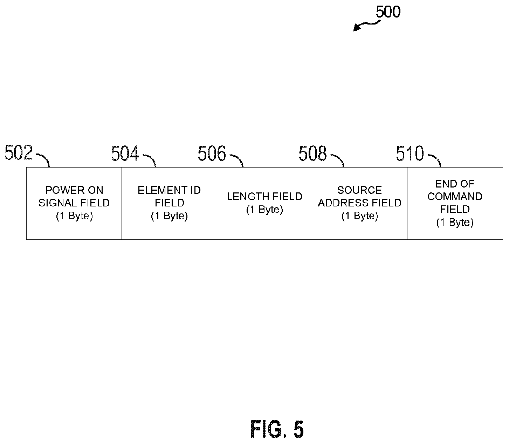

Figure 5 illustrates a message frame 500 that may be used for communicating information via the infrared communication 220, in accordance with an exemplary implementation. Those skilled in the art will appreciate that the message frame 500 can have more or fewer fields than the simplified message frame 500 described herein. The message frame 500 described herein includes only those fields useful for describing some prominent features of implementations within the scope of the claims. In some implementations, the order of the fields in the message frame 500 may be varied.

The message frame 500 may be communicated via the infrared communications 220 from the mobile device 112a to the display device 114a. The message frame may include a power on signal field 502. The power on signal field 502 may comprise the power on signal described above in relation to Figure 4. The power on signal field 502 may comprise the command that instructs the display device 114a to power on, turn on, activate its wireless communications capabilities, or perform some other command. In some implementations, where the power on command signal 402 includes additional commands or information, these additional commands or information may be contained within the power on signal field 502. The power on signal field 502 is indicated as having a length of 1 byte. However, in some implementations, the power on signal field 502 may be of a longer or a shorter length. The power on signal field 502 may include an integer value identifying the command(s) or information being communicated. The message frame 500 may further include element ID field 504. The element ID field 504 may be 1 byte in length, for example, and may include an integer value identifying the specific message frame or message frame type. For example, if the message frame 500 is used to identify a power on signal message frame, then the element ID field 504 may be a first value. If the message frame is used to identify a power on signal plus additional information, the element ID field 504 may be a second value. The message frame 500 may further include a length field, which may also be 1 byte in length. The length field may include an integer value indicating a length, in octets, of the following fields in the message frame 500. For example, the value of the message frame 500 as depicted may be 2 bytes (1 byte each for the source address field 508 and the end of command field 510). The source address field 508 of the message frame 500 may be of a length of 1 byte. The source address field 508 may comprise a MAC address or other identifying address of the source of the message frame 500. In some implementations, the source address field 508 may be in an integer format or a hexadecimal format. The message frame may further include an end of command field 510. The end of command field 510 may include an integer value indicating the end of the message frame 500.

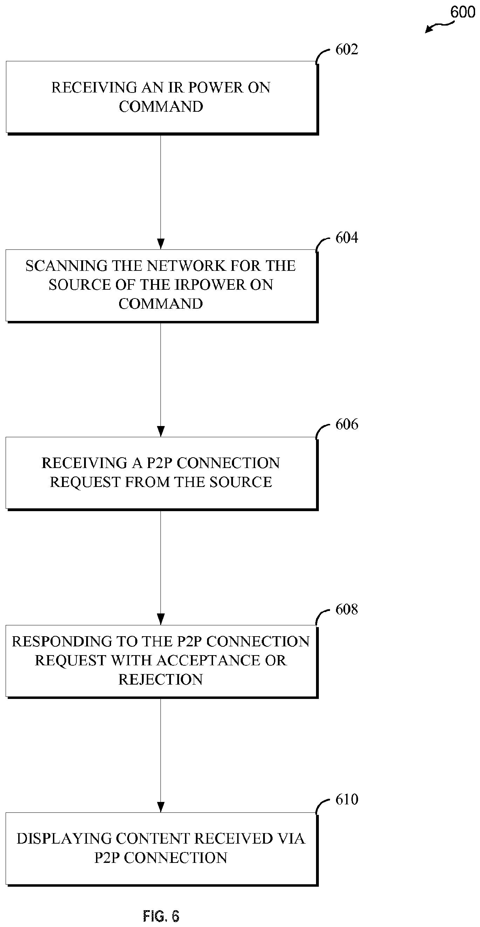

Figure 6 illustrates a flow chart of a method of establishing a P2P connection with a mobile device by the display device, in accordance with an exemplary implementation. Method 600 may be performed, in some aspects, by any of display devices 114a-114c. In some aspects, method 600 may be performed by a device already participating in P2P connections on one or more channels of a wireless network.

At block 602, the method 600 may comprise receiving an infrared power on command. The infrared power on command may correspond to the infrared communication 220 as referenced by Figure 2 and power on command message 402 as referenced by Figure 4. The infrared power on command received at block 602 may comprise the command to the display device 114a to power on or activate wireless communication capabilities. In some implementations, the infrared power on command may comprise additional commands or information, as described above. In some implementations, receiving an infrared power on command may comprise switching to a display device specific channel or MCS. After receiving the infrared power on command at block 602 and performing any commands as instructed or decoding any information contained therein, the method 600 may proceed to block 604.

At block 604, the method 600 performed by the display device 114a may comprise scanning the network for the source of the infrared power on command. For example, the source of the infrared power on command may be mobile device 112a, as described above. The scanning of block 604 may comprise the transmission of the scan messages 404 and 406 as described above in relation to Figure 4. Alternatively, as described above, the display device 114a may switch to a specific channel and wait for a P2P communication request message 408/410. Then, the method 600 proceeds to block 606.

At block 606, the method 600 of display device 114a may comprise receiving a P2P connection request from the source, the mobile device 112a. As described above, the P2P request received at block 606 may comprise one or more parameters associated with the P2P connection requested to be formed between the display device 114a and the mobile device 112a. In some implementations, the block 606 may comprise receiving the P2P request 408 or 410, as described in Figure 4. In some implementations, as described above, the block 606 may comprise receiving the P2P request on the specific channel. After the display device 114a receives the P2P connection request, the method 600 proceeds to block 608.

At block 608, the display device 114a generates and transmits a response to the P2P connection request received from the mobile device 112a at block 606. In some implementations, the response to the P2P connection request generated and transmitted at block 608 may correspond to the P2P response 412/414 as referenced in Figure 4. In some implementations, the display device 114a may generate a response to the P2P connection request received at block 606, agreeing to connect with the mobile device 112a. When the response is an acceptance of the P2P connection, the display device 114a may agree with the parameters that may have been indicated in the P2P connection request. If no parameters were indicated in the P2P connection request, or if the display device 114a disagrees with one or more of the indicated parameters, then the display device 114a may suggest specific parameters (e.g., connection speed, duration, full/half duplex, etc.). The suggested parameters may be based on default settings provided by the manufacturer or the user. In some other implementations, if parameters were suggested in the P2P request, then the display device 114a may indicate its acceptance or rejection of the suggested parameters in its response. If the display device 114a rejects the suggested parameters, then the display device 114a may suggest replacement parameters or the display device 114a may request new suggested parameters from the mobile device 112a.

Alternatively, the display device 114a may decline the P2P connection request. In some implementations, when the display device 114a declines the request, the display device 114a may provide reasons for the declining of the P2P connection request in the P2P connection response of block 608. For example, the display device 114a may decline the P2P connection due to the suggested parameters or due to the fact that the display device 114a is already participating in a P2P connection with another mobile device 112. After generating a response agreeing or disagreeing to participate in the P2P connection, the method 600 may proceed to block 610.

At block 610, the method as performed by the display device 114a may comprise displaying content received via the P2P connection. In some implementations, the display device 114a will only receive information and data via the P2P connection. In some other implementations, the display device 114a and the mobile device 112a may participate in bidirectional communications via the P2P connection. In some other implementations, the display device 114a may be controlled by the mobile device 112a acting as the source for the content received via the P2P connection.

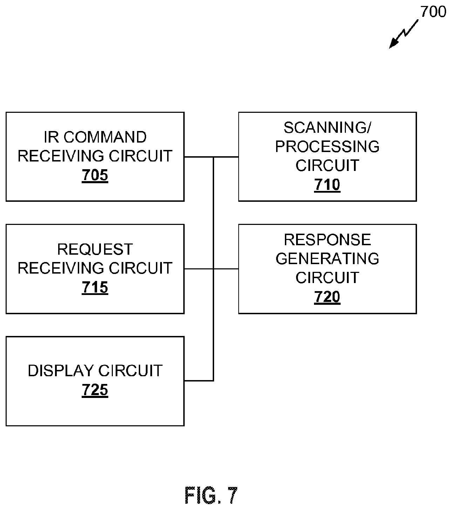

Figure 7 is a functional block diagram of an exemplary display device 112a that may be employed to establish a P2P connection with a mobile device 112a using the method 600. The device 700 comprises an infrared command receiving circuit 705, a scanning/processing circuit 710, a request receiving circuit 715, a response generating circuit 720, and a display circuit 725. The various circuits may be configured to perform one or more of the functions discussed above with respect to method 600 illustrated in Figure 6.

The infrared command receiving circuit 705 may be configured to perform one or more of the functions discussed above in relation to block 602 of method 600 illustrated in Figure 6 above. In some respects, the infrared command receiving circuit 705 may correspond to the processor 304, the transceiver 314, the receiver 312, the infrared transceiver 320, and/or the infrared emitter or receiver 321. In some aspects, the means for receiving an infrared command may include the infrared command receiving circuit 705.

The scanning/processing circuit 710 may be configured to perform one or more of the functions discussed above in relation to block 604 of method 600 illustrated in Figure 6 above. In some respects, the scanning/processing circuit 710 may correspond to the processor 304 and/or the transceiver 314. In some aspects, the means for scanning and/or processing may include the scanning/processing circuit 710.

The request receiving circuit 715 may be configured to perform one or more of the functions discussed above in relation to block 606 of method 600 illustrated in Figure 6 above. In some respects, the request receiving circuit 715 may correspond to the processor 304, the transceiver 314, and/or the receiver 312. In some aspects, the means for receiving a P2P connection request may include the request receiving circuit 715.

The response generating circuit 720 may be configured to perform one or more of the functions discussed above in relation to block 608 of method 600 illustrated in Figure 6 above. In some respects, the response generating circuit 720 may correspond to the processor 304, the transceiver 314 and/or the transmitter 314. In some aspects, the means for generating a P2P connection response may include the response generating circuit 720.

The display circuit 725 may be configured to perform one or more of the functions discussed above in relation to block 610 of method 600 illustrated in Figure 6 above. In some respects, the display circuit 725 may correspond to the processor 304, user interface 322, the transceiver 314, the receiver 312, and/or the memory 306. In some aspects, the means for displaying content received via the P2P connection and means for bidirectionally communicating content to be display on the display device with the mobile device 112a may include the display circuit 725.

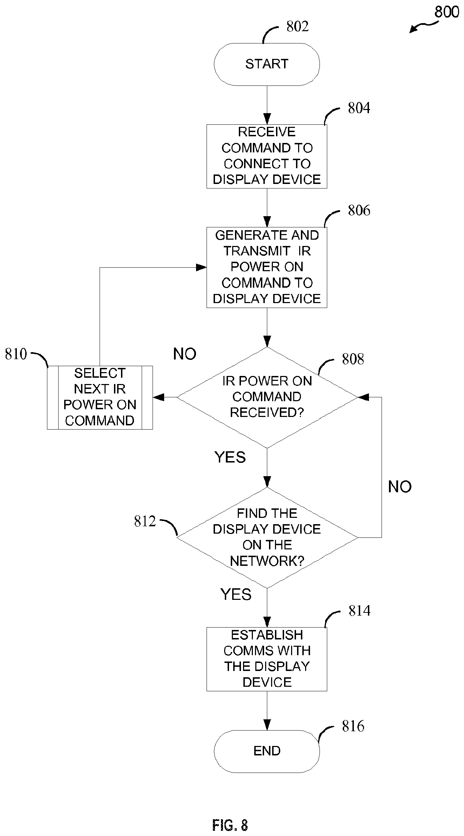

Figure 8 illustrates a flow chart of an implementation of a process by which a wireless P2P connection with the display device 114a may be created, as implemented by the mobile device 112a. The process 800 of Figure 8 may be implemented by the mobile device 112a as referenced in Figures 1-7. The process 800 may start at block 802, which may involve power being applied to the mobile device 112a such that the mobile device 112a is activated or is placed in a stand-by mode where it is capable of generating and/or receiving commands and communication signals from a user, for example an infrared communication message or a push button command.

At block 804, the mobile device 112a receives a command from a user to initiate a P2P connection with a display device 114. In some implementations, the mobile device 112a may be positioned such that the mobile device 112a is pointing to the display device 114 on which the user wishes to display content from the mobile device 112a. The mobile device 112a may receive the instruction to connect to the display device via a physical push-button or selector on the phone, via a soft-button (e.g., a software based, touch screen button, or via a verbal or any other manner of receiving user commands). After receiving the instruction to connect, the process 800 progresses to block 806.

At block 806, in response to the command received from the user to connect to the display device 114a, the mobile device 112a may generate and transmit the infrared power on command 402 (as referenced by Figure 4) to the display device 114a towards which the mobile device 112a is positioned. After transmitting the infrared power on command to the display device 114a, the mobile device 112a determines if the infrared power on command was received by the display device 114a, at block 808. In some implementations, the mobile device 112a may determine the infrared power on command was received by detecting a signal on a specific channel from the display device 114a. In some other implementations, the mobile device 112a may determine the infrared power on command was received by detecting an infrared response beacon. If the mobile device 112a does not determine the infrared power on command was received by the display device, then the process proceeds to block 810, where the mobile device 112a may select the next infrared power on command to transmit to the display device 114a.

Many display devices (e.g., televisions, projectors, monitors, etc.), may have manufacturer specific infrared power on commands. Accordingly, when the mobile device 112a selects the next infrared power on command to transmit to the display device 114a, the mobile device 112a may select from a list of manufacturer supplied infrared power on commands. While there may be many hundreds of infrared power on commands in the list, the process of selecting an infrared power on command, transmitting it to the display device 114a and checking to see if the infrared power on command was received and appropriately commanded the display device 114 may only take a few milliseconds. Accordingly, automated cycling through the list may only take a few seconds or minutes to attempt all infrared power on command codes from a list of manufacturers. In some embodiments, the user of the mobile device 112a may be given the option of selecting a specific model/manufacturer infrared power on command to send to the display device 114a. In some embodiments, the selection of infrared power on commands from the manufacturer/device list may be based on the popularity of given manufacturers or brands of display devices.

In some embodiments, selecting the infrared power on codes in blocks 806 and 810 may comprise accessing a database of infrared power on codes. In some embodiments, the database of infrared power on codes may be stored on the mobile device 112a. In some embodiments, the database of infrared power on codes may be stored on the internet or may be accessible via an internet connection, such that the mobile device 112a may be configured to access the database via a communication medium. In some embodiments, the database may be organized by manufacturer or model of the display device capable of participating in peer-to-peer communications. Accordingly, when generating the infrared power on command at block 806, the mobile device 112a may access the local or remote database and cycle through the infrared power on codes until the display device 114a is activated. In some embodiments, the mobile device 112a may default to a standard infrared power on code that may apply to all manufacturers and models capable of participating in P2P connections as requested by the mobile device 112a. In some embodiments, the mobile device 112a may cycle through all of the infrared codes in the database in an attempt to command the display device to power on.

If the mobile device 112a determines that the infrared power on command was received by the display device 114a, then the process 800 moves to block 812, where the mobile device 112a searches for the display device 114a on the wireless network at the specific channel or MCS. If the mobile device 112a does not find the display device 114 on the wireless network, the process 800 repeats blocks 808 and 812 until the display device 114a is discovered on the wireless network.

In some embodiments, more than one mobile device 112a may attempt to connect to one or more display devices 114 at the same time. For example, a mobile device 112a may attempt to connect to display device 114c, while mobile device 112b may attempt to connect to display device 114b at the same moment in time. If the two display devices 114b and 114c turn on at the same time, then both of the display devices 114b and 114c may be waiting on the network to be "found" by a mobile device 112 at the same time. However, since the two mobile devices 112a and 112b are unaware of the identifiers of the display devices 114b and 114c, the mobile devices 112a and 112b may both attempt to establish communications with the same display device 114, for example, display device 114b. If the two mobile devices 112a and 112b both attempt to establish communications with display device 114b at the same time, then the two mobile devices 112a and 112b may block each other's communications from reaching the display device 114b, and may return to block 802 or 804 to begin the method anew. In some embodiments, feedback (or some type of response) may be received by the mobile devices 112 from the display devices 114 (not shown in this figure). The received feedback may provide identifying information when the display devices 114 are waiting to establish communications such that the mobile devices 112 are capable of determining which specific display device 114 with which they intend to connect.

Once the display device 114a is discovered by the mobile device 112a, the mobile device 112a establishes the parameters for the wireless P2P connection with the display device 114a and begins communicating content to display on the display device 114a at block 814. Once the connection is established and the content is displaying, the process 800 ends at block 816.

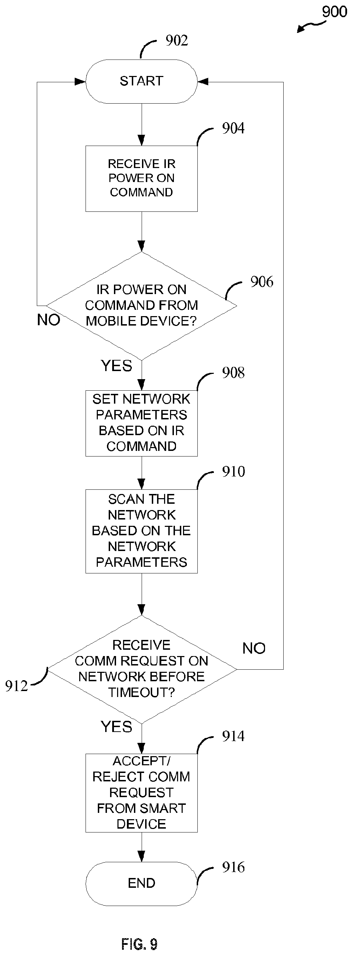

Figure 9 illustrates a flow chart of an implementation of a process to establish a wireless P2P connection with a mobile device, implemented by a display. The process 900 of Figure 9 may be implemented by a display device 114a as referenced in Figures 1-8. The process 900 may start at block 902, which may involve power being applied to the display device 114a such that the display device 114a is activated or is placed in a stand-by mode where it is capable of receiving commands and communication signals, for example an infrared communication message.

At block 904, the display device 114a receives an infrared power on command such as power on command 402 as referenced in Figure 4. Once the power on command is received the process 900 proceeds to block 906, where it is determined if the infrared power on command came from a mobile device such as mobile device 112a. In some implementations, this may be determined by the information and fields in the power on command received. If the infrared power on command did not come from a mobile device 112a (for example, the command was received from a remote, etc.), then the process returns to block 902 to await another infrared power on command. If the infrared power on command did come from mobile device 112a, the process 900 proceeds to block 908. At block 908, the display device 114a sets wireless network parameters based on the received infrared code. For example, in some implementations, receipt of a particular infrared code may cause the display device 114a to use specific wireless network parameters. In some implementations, the network parameters may comprise a specific channel and MCS. After setting the network parameters based on the infrared power on command, the process 900 proceeds to block 910. At block 910, the display device 114a scans the wireless network based on the network parameters. Alternatively, the display device 114a may broadcast a P2P signal on the specified channel of the wireless network that may be received or detected by the mobile device 112a. After scanning the wireless network, the process 900 proceeds to block 912, where the display device 114a determines if a communication request was received on the network before a timeout timer completes. If not, then the process 900 returns to step 902 and repeats the remaining steps until a communication request is received on the network before the timeout timer completes. When the communication request is received before the timeout timer completes, the process 900 proceeds to block 914, where the display device 114a determines to accept or reject the P2P communication request received from the mobile device 112a. As described above, if the P2P communication request is accepted, the display device 114a can accept or reject specific parameters proposed for the connection and may propose its own parameters. Once the P2P communication request is accepted or rejected, the process 900 ends at process 916.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of' a list of items refers to any combination of those items, including single members. As an example, "at least one of: a, b, or c" is intended to cover: a, b, c, a-b, a-c, b-c, and a-b-c.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

As used herein, the term interface may refer to hardware or software configured to connect two or more devices together. For example, an interface may be a part of a processor or a bus and may be configured to allow communication of information or data between the devices. The interface may be integrated into a chip or other device. For example, in some embodiments, an interface may comprise a receiver configured to receive information or communications from a device at another device. The interface (e.g., of a processor or a bus) may receive information or data processed by a front end or another device or may process information received. In some embodiments, an interface may comprise a transmitter configured to transmit or communicate information or data to another device. Thus, the interface may transmit information or data or may prepare information or data for outputting for transmission (e.g., via a bus).

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

## Claims

1. An apparatus for establishing peer-to-peer communications over a wireless communication network (102), comprising:
a processing system (304) configured to:
receive a command to initiate a peer-to-peer communication;
generate an infrared signal (220) for transmission to a device (114a-114c), the infrared signal (220) comprising a command to activate the device (114a-114c); and
find the device (114a-114c) on the wireless communication network over a first preferred channel;
an infrared transmitter (321) configured to transmit the infrared signal (220) to the device (114a-114c); and
an antenna (316) configured to participate in wireless communications on the wireless communication network (102),
**characterized in that** the infrared communication (220) comprises a command to set a wireless network connection of the device (114a-114c) to the first preferred channel based on one of the infrared signal (220) and a default setting of the device, and **in that** the peer-to-peer connection with the device (114a-114c) over the wireless communication network (102) is established based on the commands in the infrared signal (220).

2. The apparatus of Claim 1, where the processing system is further configured to access a database of infrared power on codes, the database of infrared power on codes comprising infrared power on codes from various manufacturers and models of display devices capable of receiving infrared signals and participating in wireless peer-to-peer communications.

3. The apparatus of Claim 2, wherein the processing system configured to generate an infrared communication is configured to generate the infrared communication based on a selected infrared power on code from the database of infrared power on codes.

4. A method (800) for establishing peer-to-peer communications over a wireless communication network (102), comprising:
receiving (804), by a first device (112a-112c), a command to initiate peer-to-peer communications;
generating (806) an infrared communication (220) for transmission to a second device (114a-114c), the infrared communication (220) comprising a command (402) to activate the second device (114a-114c);
transmitting the infrared communication to the second device (114a-114c); and
connecting to the second device (114a-114c) via a peer-to-peer connection on the wireless communication network (102),
**characterized in that** the infrared communication (220) comprises a command to set a wireless network connection of the second device (114a-114c) to a first preferred channel based on one of the infrared communication (220) and a default setting of the second device, and **in that** the peer-to-peer connection with the second device (114a-114c) over the wireless communication network (102) is established based on the commands in the infrared communication (220).

5. The method of Claim 4, further comprising receiving a response (412) to a request (408) to form the peer-to-peer connection from the second device (114a-114c), the response (412) to the request (408) comprising an indication that the second device (114a-114c) agrees to form the peer-to-peer connection or disagrees to form the peer-to-peer connection.

6. The method of Claim 5, further comprising:
listening for the second device (114a-114c) on the first preferred channel;
detecting the second device (114a-114c) on the preferred channel; and
determining that the command to turn on and to set the wireless network connection to the first preferred channel was received by the second device (114a-114c), based on a detection of the second device (114a-114c) on the first preferred channel before a first time elapses.

7. The method of Claim 5, further comprising:
listening for the second device (114a-114c) on the first preferred channel;
determining that the command to turn on and to set the wireless network connection to the first preferred channel was not received by the second device (114a-114c), based on a failure to detect the second device (114a-114c) on the first preferred channel before a first time elapses;
generating another infrared signal for transmission to the second device (114a-114c), the other infrared signal based on another command to turn on and to set a wireless connection to a second preferred channel; and
transmitting the other infrared signal to the second device (114a-114c).

8. The method of Claim 4, wherein the request to form a peer-to-peer connection with the second device (114a-114c) comprises at least one of a suggested duration for the peer-to-peer connection, a suggested speed for the peer-to-peer connection, a suggested full-duplex capability, a suggested channel, and a suggested media type.

9. The method of Claim 8, further comprising:
generating (806) a request to form the peer-to-peer connection with the second device (114a-114c);
transmitting the request to form the peer-to-peer connection to the second device (114a-114c) via the wireless communication network (114a-114c); and
receiving a response to the request to form the peer-to-peer connection from the second device (114a-114c), wherein the response from the second device (114a-114c) comprises at least one of a different suggested duration for the peer-to-peer connection, a different suggested speed for the peer-to-peer connection, a different suggested channel, and a different suggested media type, than that of the request to form the peer-to-peer connection with the second device (114a-114c).

10. An apparatus (114a-114c) for establishing peer-to-peer communications over a wireless communication network (102), comprising:
an infrared receiver (321) configured to receive an infrared signal (220) from a second apparatus (112a-112c), the infrared signal (220) comprising a command to activate (402);
an antenna (316) configured to communicate on the wireless communication network (102); and
a processing system (304) configured to:
power on the apparatus (114a-114c) if the apparatus (114a-114c) is in a stand-by or low power mode,
**characterized in that** the processing system (304) is further configured to:
set the wireless network connection to a first preferred channel based on one of the infrared signal (220) and a default setting based on a command of the infrared signal (220); and
set network parameters to the first preferred channel for the wireless communication network (102) based on the command.

11. A method (900) for establishing peer-to-peer communications over a wireless communication network, comprising:
receiving (904), by a first apparatus (114a-114c), an infrared signal (220) from a second apparatus (112a-112c), the infrared signal (220) comprising a power on signal (402) and a communication signal, the infrared signal (220) comprising a command to activate; and,
powering on the apparatus if the apparatus (114a-114c) is in a stand-by or low power mode based on the command to activate,
**characterized in that** the infrared signal (220) comprises a command to set a wireless network connection to a first preferred channel based on one of the infrared signal (220) and a default setting, and **in that** the method further comprises setting network parameters to the first preferred channel for the wireless communication network based on the command.

12. The method of Claim 11, further comprising forming a peer-to-peer connection with the second apparatus (112a-112c) on the wireless communication network, the method preferably further comprising receiving identifying information from the second apparatus (112a-112c) and identifying the second apparatus (112a-112c) on the wireless communication network before forming the peer-to-peer connection.

13. The method of Claim 11, further comprising receiving a request to form a peer-to-peer connection from the second apparatus(112a-112c) before a connection timeout timer expires, wherein the connection timeout timer comprises a duration during which the first apparatus (114a-114c) waits for a peer-to-peer request from the second apparatus (112a-112c) that send the infrared signal (220).

14. The method of Claim 13, wherein the request to form a peer-to-peer connection from the second apparatus (112a-112c) comprises at least one of a suggested duration for the peer-to-peer connection, a suggested speed for the peer-to-peer connection, a suggested full-duplex capability, a suggested channel, and a suggested media type.

15. The method of Claim 14, further comprising generating a response to the second apparatus (112a-112c) accepting or rejecting the peer-to-peer connection request, wherein the response to the request to form the peer-to-peer connection from the second device (112a-112c) comprises at least one of a different suggested duration for the peer-to-peer connection, a different suggested speed for the peer-to-peer connection, a different suggested channel, and a different suggested media type.

## Patentansprüche

1. Vorrichtung zum Einrichten von Peer-to-Peer-Kommunikationen über ein drahtloses Kommunikationsnetzwerk (102), die Folgendes umfasst:
ein Verarbeitungssystem (304), konfiguriert zum:
Empfangen eines Befehls zum Einleiten einer Peer-to-Peer-Kommunikation;
Erzeugen eines Infrarotsignals (220) zum Senden zu einem Gerät (114a-114c), wobei das Infrarotsignal (220) einen Befehl zum Aktivieren des Geräts (114a-114c) umfasst; und
Suchen des Geräts (114a-114c) auf dem drahtlosen Kommunikationsnetzwerk über einen ersten bevorzugten Kanal;
einen Infrarotsender (321), konfiguriert zum Senden des Infrarotsignals (220) zu dem Gerät (114a-114c); und
eine Antenne (316), konfiguriert zum Teilnehmen an drahtlosen Kommunikationen auf dem drahtlosen Telekommunikationsnetzwerk (102),
**dadurch gekennzeichnet, dass** die Infrarotkommunikation (220) einen Befehl zum Setzen einer drahtlosen Netzwerkverbindung des Geräts (114a-114c) auf den ersten bevorzugten Kanal auf der Basis des Infrarotsignals (220) oder einer Vorgabeeinstellung des Geräts umfasst, und dadurch, dass die Peer-to-Peer-Verbindung mit dem Gerät (114a-114c) über das drahtlose Kommunikationsnetzwerk (102) auf der Basis der Befehle im Infrarotsignal (220) eingerichtet wird.

2. Vorrichtung nach Anspruch 1, wobei das Verarbeitungssystem ferner zum Zugreifen auf eine Datenbank von Infrarot-Einschaltcodes konfiguriert ist, wobei die Datenbank von Infrarot-Einschaltcodes Infrarot-Einschaltcodes von verschiedenen Herstellern und Modellen von Anzeigegeräten umfasst, die Infrarotsignale empfangen und an drahtlosen Peer-to-Peer-Kommunikationen teilnehmen können.

3. Vorrichtung nach Anspruch 2, wobei das Verarbeitungssystem, das zum Erzeugen einer Infrarotkommunikation konfiguriert ist, zum Erzeugen der Infrarotkommunikation auf der Basis eines gewählten Infrarot-Einschaltcodes von der Datenbank von Infrarot-Einschaltcodes konfiguriert ist.

4. Verfahren (800) zum Einrichten von Peer-to-Peer-Kommunikationen über ein drahtloses Kommunikationsnetzwerk (102), das Folgendes beinhaltet:
Empfangen (804), durch ein erstes Gerät (112a-112c), eines Befehls zum Einleiten von Peer-to-Peer-Kommunikationen;
Erzeugen (806) einer Infrarotkommunikation (220) zum Senden zu einem zweiten Gerät (114a-114c), wobei die Infrarotkommunikation (220) einen Befehl (402) zum Aktivieren des zweiten Geräts (114a-114c) umfasst;
Senden der Infrarotkommunikation zum zweiten Gerät (114a-114c); und
Verbinden mit dem zweiten Gerät (114a-114c) über eine Peer-to-Peer-Verbindung auf dem drahtlosen Kommunikationsnetzwerk (102),
**dadurch gekennzeichnet, dass** die Infrarotkommunikation (220) einen Befehl zum Setzen einer drahtlosen Netzwerkverbindung des zweiten Geräts (114a-114c) auf einen ersten bevorzugten Kanal auf der Basis der Infrarotkommunikation (220) oder einer Vorgabeeinstellung des zweiten Geräts umfasst, und dadurch, dass die Peer-to-Peer-Verbindung mit dem zweiten Gerät (114a-114c) über das drahtlose Kommunikationsnetzwerk (102) auf der Basis der Befehle in der Infrarotkommunikation (220) eingerichtet wird.

5. Verfahren nach Anspruch 4, das ferner das Empfangen einer Antwort (412) auf eine Anforderung (408) zum Bilden der Peer-to-Peer-Verbindung vom zweiten Gerät (114a-114c) beinhaltet, wobei die Antwort (412) auf die Anforderung (408) eine Anzeige umfasst, dass das zweite Gerät (114a-114c) bereit zum Bilden der Peer-to-Peer-Verbindung oder nicht bereit zum Bilden der Peer-to-Peer-Verbindung ist.

6. Verfahren nach Anspruch 5, das ferner Folgendes beinhaltet:
Horchen auf das zweite Gerät (114a-114c) auf dem ersten bevorzugten Kanal;
Erkennen des zweiten Geräts (114a-114c) auf dem bevorzugten Kanal; und
Feststellen, dass der Befehl zum Einschalten und zum Einrichten der drahtlosen Netzwerkverbindung auf den ersten bevorzugten Kanal vom zweiten Gerät (114a-114c) empfangen wurde, auf der Basis einer Erkennung des zweiten Geräts (114a-114c) auf dem ersten bevorzugten Kanal, bevor eine erste Zeit verstreicht.

7. Verfahren nach Anspruch 5, das ferner Folgendes beinhaltet:
Horchen auf das zweite Gerät (114a-114c) auf dem ersten bevorzugten Kanal;
Feststellen, dass der Befehl zum Einschalten und zum Einrichten der drahtlosen Netzwerkverbindung auf dem ersten bevorzugten Kanal vom zweiten Gerät (114a-114c) nicht empfangen wurde, auf der Basis einer Nichterkennung des zweiten Geräts (114a-114c) auf dem ersten bevorzugten Kanal, bevor eine erste Zeit verstreicht;
Erzeugen eines anderen Infrarotsignals zum Senden zum zweiten Gerät (114a-114c), wobei das andere Infrarotsignal auf der Basis eines anderen Befehls zum Einschalten und zum Einrichten einer drahtlosen Verbindung mit einem zweiten bevorzugten Kanal basiert; und
Senden des anderen Infrarotsignals zum zweiten Gerät (114a-114c).

8. Verfahren nach Anspruch 4, wobei die Anforderung zum Bilden einer Peer-to-Peer-Verbindung mit dem zweiten Gerät (114a-114c) wenigstens eines aus einer vorgeschlagenen Dauer für die Peer-to-Peer-Verbindung, einer vorgeschlagenen Geschwindigkeit für die Peer-to-Peer-Verbindung, einer vorgeschlagenen Vollduplex-Fähigkeit, einem vorgeschlagenen Kanal und einem vorgeschlagenen Medientyp umfasst.

9. Verfahren nach Anspruch 8, das ferner Folgendes beinhaltet:
Erzeugen (806) einer Anforderung zum Bilden der Peer-to-Peer-Verbindung mit dem zweiten Gerät (114a-114c);
Senden der Anforderung zum Bilden der Peer-to-Peer-Verbindung zum zweiten Gerät (114a-114c) über das drahtlose Kommunikationsnetzwerk (114a-114c); und
Empfangen einer Antwort auf die Anforderung zum Bilden der Peer-to-Peer-Verbindung vom zweiten Gerät (114a-114c), wobei die Antwort vom zweiten Gerät (114a-114c) wenigstens eines aus einer anderen vorgeschlagenen Dauer für die Peer-to-Peer-Verbindung, einer anderen vorgeschlagenen Geschwindigkeit für die Peer-to-Peer-Verbindung, einem anderen vorgeschlagenen Kanal und einem anderen vorgeschlagenen Medientyp als dem der Anforderung zum Bilden der Peer-to-Peer-Verbindung mit dem zweiten Gerät (114a-114c) umfasst.

10. Vorrichtung (114a-114c) zum Einrichten von Peer-to-Peer-Kommunikationen über ein drahtloses Kommunikationsnetzwerk (102), die Folgendes umfasst:
einen Infrarotempfänger (321), konfiguriert zum Empfangen eines Infrarotsignals (220) von einer zweiten Vorrichtung (112a-112c), wobei das Infrarotsignal (220) einen Befehl zum Aktivieren (402) umfasst;
eine Antenne (316), konfiguriert zum Kommunizieren auf dem drahtlosen Kommunikationsnetzwerk (102); und
ein Verarbeitungssystem (304), konfiguriert zum:
Einschalten der Vorrichtung (114a-114c), wenn die Vorrichtung (114a-114c) in einem Bereitschafts- oder Niedrigleistungsmodus ist;
**dadurch gekennzeichnet, dass** das Verarbeitungssystem (304) ferner konfiguriert ist zum:
Setzen der drahtlosen Netzwerkverbindung auf einen ersten bevorzugten Kanal auf der Basis des Infrarotsignals (220) oder einer Vorgabeeinstellung auf der Basis eines Befehls des Infrarotsignals (220); und
Einstellen von Netzwerkparametern auf den ersten bevorzugten Kanal für das drahtlose Kommunikationsnetzwerk (102) auf der Basis des Befehls.

11. Verfahren (900) zum Einrichten von Peer-to-Peer-Kommunikationen über ein drahtloses Kommunikationsnetzwerk, das Folgendes beinhaltet:
Empfangen (904), durch eine erste Vorrichtung (114a-114c), eines Infrarotsignals (220) von einer zweiten Vorrichtung (112a-112c), wobei das Infrarotsignal (220) ein Einschaltsignal (402) und ein Kommunikationssignal umfasst, wobei das Infrarotsignal (220) einen Befehl zum Aktivieren umfasst; und
Einschalten der Vorrichtung, wenn die Vorrichtung (114a-114c) in einem Bereitschafts- oder einem Niedrigleistungsmodus ist, auf der Basis des Befehls zum Aktivieren,
**dadurch gekennzeichnet, dass** das Infrarotsignal (220) einen Befehl zum Setzen einer drahtlosen Netzwerkverbindung auf einen ersten bevorzugten Kanal auf der Basis des Infrarotsignals (220) oder einer Vorgabeeinstellung umfasst, und dadurch, dass das Verfahren ferner das Einstellen von Netzwerkparametern auf den ersten bevorzugten Kanal für das drahtlose Kommunikationsnetzwerk auf der Basis des Befehls beinhaltet.

12. Verfahren nach Anspruch 11, das ferner das Bilden einer Peer-to-Peer-Verbindung mit der zweiten Vorrichtung (112a-112c) auf dem drahtlosen Kommunikationsnetzwerk beinhaltet, wobei das Verfahren ferner das Empfangen von Identifikationsinformationen von der zweiten Vorrichtung (112a-112c) und das Identifizieren der zweiten Vorrichtung (112a-112c) auf dem drahtlosen Kommunikationsnetzwerk vor dem Bilden der Peer-to-Peer-Verbindung beinhaltet.

13. Verfahren nach Anspruch 11, das ferner das Empfangen einer Anforderung zum Bilden einer Peer-to-Peer-Verbindung von der zweiten Vorrichtung (112a-112c) vor Ablauf eines Verbindungs-Timeout-Timers beinhaltet, wobei der Verbindungs-Timeout-Timer eine Dauer umfasst, während der die erste Vorrichtung (114a-114c) auf eine Peer-to-Peer-Anforderung von der zweiten Vorrichtung (112a-112c) wartet, die das Infrarotsignal (220) sendet.

14. Verfahren nach Anspruch 13, wobei die Anforderung zum Bilden einer Peer-to-Peer-Verbindung von der zweiten Vorrichtung (112a-112c) wenigstens eines aus einer vorgeschlagenen Dauer für die Peer-to-Peer-Verbindung, einer vorgeschlagenen Geschwindigkeit für die Peer-to-Peer-Verbindung, einer vorgeschlagenen Vollduplex-Fähigkeit, einem vorgeschlagenen Kanal und einem vorgeschlagenen Medientyp umfasst.

15. Verfahren nach Anspruch 14, das ferner das Erzeugen einer Antwort an die zweite Vorrichtung (112a-112c) beinhaltet, die das Akzeptieren oder Zurückweisen der Peer-to-Peer-Verbindungsanforderung beinhaltet, wobei die Antwort auf die Anforderung zum Bilden der Peer-to-Peer-Verbindung vom zweiten Gerät (112a-112c) wenigstens eines aus einer anderen vorgeschlagenen Dauer für die Peer-to-Peer-Verbindung, einer anderen vorgeschlagenen Geschwindigkeit für die Peer-to-Peer-Verbindung, einem anderen vorgeschlagenen Kanal und einem anderen vorgeschlagenen Medientyp umfasst.

## Revendications

1. Appareil d'établissement de communications poste à poste sur un réseau de télécommunications sans fil (102), comprenant :
un système de traitement (304) configuré pour :
recevoir une demande de lancement d'une communication poste à poste ;
générer un signal infrarouge (220) destiné à être transmis à un dispositif (114a-114c), le signal infrarouge (220) comprenant une commande d'activation du dispositif (114a-114c) ; et
trouver le dispositif (114a-l 14c) sur le réseau de télécommunications sans fil sur un premier canal préféré ;
un émetteur infrarouge (321) configuré pour transmettre le signal infrarouge (220) au dispositif (114a-114c) ; et
une antenne (316) configurée pour participer à des communications sans fil sur le réseau de télécommunications sans fil (102),
**caractérisé en ce que** la communication infrarouge (220) comprend une commande de réglage d'une connexion de réseau sans fil du dispositif (114a-114c) sur le premier canal préféré en fonction de l'un du signal infrarouge (220) et d'un réglage par défaut du dispositif, et **en ce que** la connexion poste à poste avec le dispositif (114a-114c) sur le réseau de télécommunications sans fil (102) est établie en fonction des commandes dans le signal infrarouge (220).

2. Appareil selon la revendication 1, dans lequel le système de traitement est configuré en outre pour solliciter une base de données de codes de puissance infrarouge, la base de données de codes de puissance infrarouge comprenant des codes de puissance infrarouge de divers constructeurs et modèles de dispositifs d'affichage capables de redevoir des signaux infrarouges et de participer à une communication sans fil poste à postes.

3. Appareil selon la revendication 2, dans lequel le système de traitement configuré pour générer une communication infrarouge est configuré pour générer la communication infrarouge en fonction d'un code de puissance infrarouge sélectionné dans la base de données de codes de puissance infrarouge.

4. Procédé (800) d'établissement de communications poste à poste sur un réseau de télécommunications sans fil (102), comprenant :
la réception (804), par un premier dispositif (112a-112c), d'une commande de lancement de communications poste à poste ;
la génération (806) d'une communication infrarouge (220) pour la transmission à un second dispositif (114a-114c), la communication infrarouge (220) comprenant une commande (402) d'activation du second dispositif (114a-114c) ;
la transmission de la communication infrarouge au second dispositif (114a-114c) ; et
la connexion au second dispositif (114a-114c) par l'intermédiaire d'une connexion poste à poste sur le réseau de télécommunications sans fil (102),
**caractérisé en ce que** la communication infrarouge (220) comprend une commande de réglage d'une connexion de réseau sans fil du second dispositif (114a-114c) sur un premier canal préféré en fonction de l'un de la communication infrarouge (220) et d'un réglage par défaut du second dispositif, et **en ce que** la connexion poste à poste avec le second dispositif (114a-114c) sur le réseau de télécommunications sans fil (102) est établie en fonction des commandes dans la communication infrarouge (220).

5. Procédé selon la revendication 4, comprenant en outre la réception d'une réponse (412) à une demande (408) de formation de la connexion poste à poste en provenance du second dispositif (114a-114c), la réponse (412) à la demande (408) comprenant une indication que le second dispositif (114a-114c) convient de former la connexion poste à poste ou ne convient pas de former la connexion poste à poste.

6. Procédé selon la revendication 5, comprenant en outre :
la recherche par écoute du second dispositif (114a-114c) sur le premier canal préféré ;
la détection du second dispositif (114a-114c) sur le canal préféré ; et
la détermination que la commande d'activation et de réglage de la connexion de réseau sans fil sur le premier canal préféré a été reçue par le second dispositif (114a- 114c), suite à la détection du second dispositif (114a-114c) sur le premier canal préféré avant l'expiration d'une première durée.

7. Procédé selon la revendication 5, comprenant en outre :
la recherche par écoute du second dispositif (114a-114c) sur le premier canal préféré ;
la détermination que la commande d'activation et de réglage de la connexion de réseau sans fil sur le premier canal préféré n'a pas été reçue par le second dispositif (114a- 114c), suite à la non-détection du second dispositif (114a-114c) sur le premier canal préféré avant l'expiration d'une première durée ;
la génération d'un autre signal infrarouge destiné à être transmis au second dispositif (114a-114c), l'autre signal infrarouge étant fonction d'une autre commande d'activation et de réglage d'une connexion sans fil sur un second canal préféré ; et
la transmission de l'autre signal infrarouge au second dispositif (114a-114c).

8. Procédé selon la revendication 4, dans lequel la demande de formation d'une connexion poste à poste avec le second dispositif (114a-114c) comprend au moins l'un d'une durée suggérée de la connexion poste à poste, d'une vitesse suggérée de la connexion poste à poste, d'une capabilité suggérée de duplex intégral, d'un canal suggéré et d'un type de support suggéré.

9. Procédé selon la revendication 8, comprenant en outre :
la génération (806) d'une demande de formation de la connexion poste à poste avec le second dispositif (114a-114c) ;
la transmission de la demande de formation de la connexion poste à poste au second dispositif (114a-114c) par l'intermédiaire du réseau de télécommunications sans fil (114a-114c) ; et
la réception d'une réponse à la demande de formation de la connexion poste à poste en provenance du second dispositif (114a-114c), dans lequel la réponse en provenance du second dispositif (114a-114c) comprend au moins l'un d'une différente durée suggérée de la connexion poste à poste, d'une différente vitesse suggérée de la connexion poste à poste, d'un différent canal suggéré, et d'un différent type de support suggéré, par rapport à ceux de la demande de formation de la connexion poste à poste avec le second dispositif (114a-114c).

10. Appareil (114a-114c) d'établissement de communications poste à poste sur un réseau de télécommunications sans fil (102), comprenant :
un récepteur infrarouge (321) configuré pour recevoir un signal infrarouge (220) depuis un second appareil (112a-112c), le signal infrarouge (220) comprenant une commande d'activation (402) ;
une antenne (316) configurée pour communiquer sur le réseau de télécommunications sans fil (102); et
un système de traitement (304) configuré pour :
mettre sous tension l'appareil (114a-114c) si l'appareil (114a-114c) est en mode de veille ou basse puissance,
**caractérisé en ce que** le système de traitement (304) est configuré en outre pour :
régler la connexion de réseau sans fil sur un premier canal préféré en fonction de l'un du signal infrarouge (220) et d'un réglage par défaut en fonction d'une commande du signal infrarouge (220) ; et
régler des paramètres de réseau sur le premier canal préféré du réseau de télécommunications sans fil (102) en fonction de la commande.

11. Procédé (900) d'établissement de communications poste à poste sur un réseau de télécommunications sans fil, comprenant :
la réception (904), par un premier appareil (114a-114c), d'un signal infrarouge (220) depuis un second appareil (112a-112c), le signal infrarouge (220) comprenant un signal de mise sous tension (402) et un signal de communication, le signal infrarouge (220) comprenant une commande d'activation ; et,
la mise sous tension de l'appareil (114a-114c) si l'appareil est en mode de veille ou basse puissance en fonction de la commande d'activation,
**caractérisé en ce que** le signal infrarouge (220) comprend une commande de réglage d'une connexion de réseau sans fil sur un premier canal préféré en fonction de l'un du signal infrarouge (220) et d'un réglage par défaut, et **en ce que** le procédé comprend en outre le réglage de paramètres de réseau sur le premier canal préféré du réseau de télécommunications sans fil (102) en fonction de la commande.

12. Procédé selon la revendication 11, comprenant en outre la formation d'une connexion poste à poste avec le second appareil (112a-112c) sur le réseau de télécommunications sans fil, le procédé comprenant en outre de préférence la réception d'informations d'identification depuis le second appareil (112a-112c) et l'identification du second appareil (112a-112c) sur le réseau de télécommunications sans fil avant la formation de la connexion poste à poste.

13. Procédé selon la revendication 11, comprenant en outre la réception d'une demande de formation d'une connexion poste à poste depuis le second appareil (112a-112c) avant l'expiration d'un minuteur de dépassement de connexion, dans lequel le minuteur de dépassement de connexion comprend une durée durant laquelle le premier appareil (114a-114c) attend une demande poste à poste depuis le second appareil (112a-112c) qui envoie le signal infrarouge (220).

14. Procédé selon la revendication 13, dans lequel la demande de formation d'une connexion poste à poste depuis le second appareil (112a-112c) comprend au moins l'un d'une durée suggérée de la connexion poste à poste, d'une vitesse suggérée de la connexion poste à poste, d'une capabilité suggérée de duplex intégral, d'un canal suggéré et d'un type de support suggéré.

15. Procédé selon la revendication 14, comprenant en outre la génération d'une réponse au second appareil (112a-112c) qui accepte ou rejette la demande de connexion poste à poste, dans lequel la réponse à la demande de formation de la connexion poste à poste en provenance du second dispositif (112a-112c) comprend au moins l'un d'une différente durée suggérée de la connexion poste à poste, d'une différente vitesse suggérée de la connexion poste à poste, d'un différent canal suggéré, et d'un différent type de support suggéré.
